# EUROPEAN PATENT APPLICATION

(11) **EP 4 620 724 A1**
(43) Date of publication of application: **24.09.2025**
(21) Application number: 24186414.9
(22) Date of filing: 04.07.2024
(51) Int. Cl.: B60L 53/30, B60L 53/63, B60L 53/64, B60L 53/65, B60L 53/66, B60L 53/68, B60L 55/00

(54) **ENERGY TRANSFER BY ELECTRIC VEHICLES**

(30) Priority: 18.03.2024 EP 24164324
(71) Applicant: Zappass NV, 2270 Herenthout (BE)
(72) Inventor: DE VREE, Kristof, 2840 Reet (BE); ULRICH, Frank, 2460 Kasterlee (BE); VAN THILLO, Marc, 2920 Kalmthout (BE)
(74) Representative: Winger

(57) **Abstract**

The present invention relates to a method for managing the energy transfer during the charging and/or discharging of an electric vehicle (EV). The method involves a user selecting an electrical charging facility, which is associated with a first energy counter owned by the facility owner. The method includes capturing the amount of energy transferred between the EV and the charging facility using a data meter. This data is then transferred to a second energy counter associated with the user, which could be linked directly to the user or an organization related to the user, such as the user's employer. The second energy counter is updated with the transferred energy data, and the first energy counter is corrected accordingly.

## Description

### Technical field of the invention

The present invention pertains to the field of energy management systems, specifically to methods and systems for managing the charging and discharging of electric vehicles (EVs) in relation to energy accounting and distribution networks.

### Background of the invention

The invention pertains to the field of electric vehicle (EV) charging, a critical component of the broader transition to sustainable transportation. As the world grapples with the urgent need to reduce greenhouse gas emissions and combat climate change, the electrification of the transportation sector has emerged as a pivotal strategy. Governments around the world are setting ambitious targets to phase out internal combustion engine vehicles and replace them with EVs, with some mandates requiring all new vehicles to be electric by 2035.

In this context, the availability and accessibility of EV charging infrastructure have become pressing concerns. The majority of EV charging occurs at home or the workplace, suggesting that these locations are key to the widespread adoption of electric vehicles. However, the current landscape of EV charging presents several challenges that hinder the seamless integration of EVs into daily life.

One of the primary issues is the scarcity of charging points, particularly at workplaces and in public spaces. This scarcity can lead to range anxiety for EV drivers, who may worry about finding a charging station when needed. Additionally, the existing public charging infrastructure often comes with high usage costs, which can deter potential EV adopters.

Another significant challenge is the administrative complexity associated with home charging. Homeowners who wish to install EV chargers may face hurdles such as obtaining permits, managing installation costs, and dealing with variable electricity rates. Moreover, the prepayment systems for public charging stations add another layer of inconvenience, as users must often estimate their charging needs in advance and may end up overpaying for energy because public charging rates often are much higher than the common electricity rates.

The current electrical grid also poses limitations, as it may lack the capacity to support a rapid increase in EV charging demand. This could lead to grid instability and necessitate costly infrastructure upgrades. Furthermore, the optimal integration of the fluctuating renewable energy sources, such as solar and wind power into the EV charging process needs to be steered more on basis of availability. This to better balance available and consumed electricity, resulting in less switching to fossil peak power plants, more stable energy grids and a sustainable energy ecosystem.

Despite the progress made in EV technology and the growing network of charging stations, these challenges underscore the need for further advancements in the field of EV charging. Innovative solutions are required to streamline the charging process, reduce administrative burdens, and ensure that the grid can accommodate the growing fleet of electric vehicles. There is a clear need for a system that can address these issues, facilitating a smoother transition to electric mobility and supporting the global shift towards a zero-carbon future.

### Summary of the invention

It is an object of embodiments of the present invention to facilitate the attribution of electricity consumption to different parties, enabling efficient and financially equitable energy management for electric vehicle charging. This objective is accomplished by a method for managing the energy transfer during the charging and/or discharging of an electric vehicle involving user interaction and energy counters associated with both the charging facility owner and the user according to the invention.

In the first aspect, the present invention relates to a method for controlling charging and/or discharging of an electrical vehicle (EV) by a user, the method comprising identifying the selected electrical charging facility selected by the user for charging and/or discharging his electrical vehicle, the electrical charging facility being owned by a charging facility owner and a first energy counter being associated with the charging facility owner, capturing from a data meter associated with the selected electrical charging facility data, preferably in real time, identifying the amount of transferred energy which is transferred between the electrical charging facility and the electrical vehicle during the charging and/or discharging, transferring the data identifying the transferred energy to a second energy counter associated with the user, and adapting the second energy counter with the data identifying the transferred energy, correcting the first energy counter with the data identifying the amount of transferred energy. It is an advantage of embodiments of the present invention that accurate accounting is obtained for energy transfer, e.g. charging, thus directly charging the user who is charging for the corresponding costs, while the owner of the electrical charging facility is not involved in the payment of these costs. It is an advantage of embodiments of the present invention that sharing of electrical charging facilities is promoted, since the owner of the electrical charging facility has little or no overhead in the charging by other users.

The method may comprise controlling the energy transfer based on one or more conditions for one or more of the electrical vehicles, the user, the electrical charging facility, the charging facility owner, an electrical grid coupled to the electrical charging facility or a combination thereof.

In embodiments, the transferred energy may be energy absorbed by the electrical vehicle during charging. This embodiment provides the advantage of simplifying the tracking of energy consumption specifically related to vehicle charging.

It is an advantage of embodiments of the present invention that charging of electrical vehicles can be easily done without disturbing the owner of the electrical charging facility.

In embodiments, the electrical vehicle may allow for bi-directional energy transfer. This embodiment offers the advantage of enabling energy to be both supplied to and received from the electrical vehicle, enhancing the flexibility of energy management.

It is an advantage of embodiments of the present invention that batteries of EV's can assist in storage of electrical energy, thus allowing (relatively small) exchange of electricity back and forth per vehicle.

It is an advantage of embodiments of the present invention that by using the principle of using electrical batteries of electrical vehicles to store and return energy on the electricity net for a large amount of electrical vehicles, overall a large battery capacity can be obtained providing energy for use, e.g. at moments in time that renewable energy sources are less available.

In embodiments, the method may comprise transferring energy between the electrical vehicle and the electrical charging facility for generating energy in an electricity grid coupled to the electrical charging facility. This embodiment has the advantage of integrating the vehicle into the broader energy grid, potentially contributing to grid stability and energy generation.

In embodiments, the electricity grid may comprise a domestic electricity grid and wherein the domestic consumption in the electricity grid is taken into account to decide whether and how energy transfer from the electrical vehicle to the electrical charging facility is performed. This embodiment provides the advantage of optimizing energy usage within a domestic setting, potentially leading to cost savings and improved energy efficiency.

In embodiments, the electricity grid may comprise a public grid and wherein the energy balance of the public electricity grid is taken into account to decide whether and how energy transfer between the electrical vehicle and the electrical charging facility is performed. This embodiment offers the advantage of contributing to the overall energy balance of the public grid, which can be critical for grid management and stability.

In embodiments, for energy transfer between the electrical vehicle and the electrical charging facility the dynamic price of electricity may be taken into account. This embodiment provides the advantage of enabling cost-effective energy transactions by considering fluctuating energy prices.

It is an advantage of embodiments of the present invention that a reduction of energy cost can be obtained, by using batteries of electrical vehicles as element for controlling the available energy.

In embodiments, for energy transfer between the electrical vehicle and the electrical charging facility one or more of an energy price, a production of a home energy system, one or more grid stabilization considerations, mobility requirements of the user, predictions on an energy production and/or consumption of a home energy system and/or predictions on an energy production and/or consumption of a public energy system may be taken into account. This embodiment offers the advantage of a comprehensive approach to energy management that considers various factors for optimal decision-making.

In embodiments, for energy transfer between the electrical vehicle and the electrical charging facility a user profile may be taken into account, the user profile comprising one or more of a preferred charging speed, an energy price, an expected or predicted mobility requirement of the user and/or a historical, expected or predicted energy production and/or consumption of a home energy system of the user. This embodiment provides the advantage of personalizing the energy transfer process to the user's preferences and needs, enhancing user satisfaction and system efficiency.

It is an advantage of embodiments of the present invention that charging can be done in line with the preferences for charging defined by the user.

In the second aspect, the present invention relates to a system for controlling charging and/or discharging of an electrical vehicle (EV) by a user, the system comprising a processor programmed for identifying a selected electrical charging facility selected by the user for charging and/or discharging his electrical vehicle and for identifying the user, the electrical charging facility being owned by a charging facility owner and a first energy counter being associated with the charging facility owner, the processor being programmed for capturing, e.g. capturing in real-time, from a data meter associated with the selected electrical charging facility data identifying the amount of transferred energy which was transferred between the electrical charging facility and the electrical vehicle during the charging and/or discharging, for transferring the data identifying the transferred energy to a second energy counter associated with the user, and adapting the second energy counter with the data identifying the transferred energy, and for correcting the first energy counter with the data identifying the amount of transferred energy. This aspect provides the advantage of automating the energy transfer process, reducing the need for manual intervention and increasing accuracy.

It is an advantage of embodiments of the present invention that a method for controlling charging and/or discharging of an electrical vehicle (EV) by a user is provided, which enhances the user experience by simplifying the process of energy transfer. It is a further advantage of embodiments of the present invention that the selected electrical charging facility can be identified by the user, promoting convenience and accessibility. It is an additional advantage of embodiments of the present invention that data capturing from a data meter associated with the selected electrical charging facility allows for precise tracking of the amount of transferred energy, ensuring accuracy and transparency in energy transactions.

It is an advantage of embodiments of the present invention that the transfer of data identifying the transferred energy to a second energy counter associated with the user enables personal management of energy consumption and costs. It is a further advantage of embodiments of the present invention that the correction of the first energy counter with the data identifying the amount of transferred energy ensures fairness and accountability for the charging facility owner. It is an additional advantage of embodiments of the present invention that the second energy counter may be directly linked with the user or an organization associated with the user, such as an employer, providing flexibility and integration with existing systems.

It is an advantage of embodiments of the present invention that the method allows for bi-directional energy transfer, which can facilitate energy sharing and storage solutions. It is a further advantage of embodiments of the present invention that the method includes transferring energy between the electrical vehicle and the electrical charging facility for generating energy in an electricity grid, which can contribute to grid stability and energy efficiency. It is an additional advantage of embodiments of the present invention that the domestic consumption in the electricity grid can be taken into account, optimizing energy usage within the home.

It is an advantage of embodiments of the present invention that the energy balance of the public electricity grid can be considered, which may lead to more strategic and efficient energy distribution. It is a further advantage of embodiments of the present invention that the dynamic price of electricity can be taken into account for energy transfer decisions, potentially leading to cost savings for the user. It is an additional advantage of embodiments of the present invention that various factors such as energy price, home energy system production, grid stabilization considerations, and mobility requirements of the user can be integrated into the decision-making process for energy transfer.

It is an advantage of embodiments of the present invention that predictions on energy production and/or consumption of home and public energy systems can be utilized, allowing for proactive energy management. It is a further advantage of embodiments of the present invention that a user profile can be taken into account, which may include preferred charging speed, energy price, and mobility requirements, tailoring the charging experience to individual needs.

It is an advantage of embodiments of the present invention that a system for controlling charging and/or discharging of an electrical vehicle (EV) by a user is provided, which includes a processor programmed for identifying a selected electrical charging facility and the user, streamlining the process and enhancing user interaction with the system. It is a further advantage of embodiments of the present invention that the processor is capable of capturing and transferring data regarding transferred energy, which can automate and simplify the billing and energy management process for both the user and the charging facility owner.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1 illustrates different charging profiles for charging an electric vehicle with a 75kWh battery from 50% to 100% state of charge.
FIG. 2 illustrates the evolution of the number of electric vehicles as expected in Belgium.
FIG. 3 illustrates an exemplary method for controlling energy transfer according to an embodiment of the present invention.
FIG. 4 illustrates an exemplary system for controlling energy transfer according to an embodiment of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top and over and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", also used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be interpreted as being limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of the same embodiment, wherein the term "comprising" is replaced by "consisting of", is also encompassed within the scope of the present invention.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

As used herein, and unless otherwise specified, the term "electrical vehicle (EV)" refers to a vehicle that is powered entirely or partially by electricity, typically stored in rechargeable battery packs. This includes all-electric vehicles (EVs), plug-in hybrid electric vehicles (PHEVs), and hybrid electric vehicles (HEVs) that can be charged from an external electrical source.

As used herein, and unless otherwise specified, the term "charging and/or discharging" refers to the process of either adding electrical energy to an EV's battery (charging) or releasing electrical energy from an EV's battery back to an external system or grid (discharging). Examples of charging include plugging the EV into a wall outlet or charging station, while examples of discharging include vehicle-to-grid (V2G) services or using the EV's battery to power external devices or systems.

As used herein, and unless otherwise specified, the term "selected electrical charging facility" refers to a specific location or device that has been chosen by the user to charge or discharge their EV. This facility is equipped with the necessary infrastructure to facilitate the transfer of electrical energy to or from the EV. Examples include public charging stations, residential charging units, and commercial charging points.

As used herein, and unless otherwise specified, the term "charging facility owner" refers to the individual, company, or entity that owns or operates the selected electrical charging facility. This owner is responsible for the maintenance and operation of the charging facility and may charge a fee for its use.

As used herein, and unless otherwise specified, the term "transferred energy" refers to the quantity of electrical energy that is moved between the EV and the electrical charging facility during a charging or discharging session. This energy can be quantified in kilowatt-hours (kWh) or other appropriate units of electrical energy.

As used herein, and unless otherwise specified, the term "bi-directional energy transfer" refers to the capability of the EV and the charging facility to both receive energy from and supply energy to an external source or grid. This allows the EV to act as a temporary energy storage device that can contribute to grid stability or power supply.

As used herein, and unless otherwise specified, the term "electricity grid" refers to the interconnected network for delivering electricity from producers to consumers. It may include power stations, transmission lines, substations, and distribution lines. Examples of electricity grids include domestic grids that serve residential areas and public grids that serve larger communities or regions.

As used herein, and unless otherwise specified, the term "dynamic price of electricity" refers to the variable pricing of electricity that can change based on factors such as supply and demand, time of day, market conditions, or availability of renewable energy sources. Dynamic pricing aims to reflect the real-time market price of electricity.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to a method for controlling charging and/or discharging of an electrical vehicle (EV) by a user. The method comprises identifying the selected electrical charging facility selected by the user for charging and/or discharging his electrical vehicle, the electrical charging facility being owned by a charging facility owner and a first energy counter being associated with the charging facility owner. The method also comprises capturing from a data meter associated with the selected electrical charging facility data identifying the amount of transferred energy which was transferred between the electrical charging facility and the electrical vehicle during the charging and/or discharging. The method also comprises transferring the data identifying the transferred energy to a second energy counter associated with the user, and adapting the second energy counter with the data identifying the transferred energy. The method also comprises correcting the first energy counter with the data identifying the amount of transferred energy.

Not every EV driver has a permanent parking space on private property available and therefore some electric vehicle drivers depend on public charging, hopefully within walking distance, weather conditions not taken into account, and time-bound because other people also want to charge. Embodiments of the present invention stimulate facilitation of use of electrical charge installations by owners for other users. This does not only reduce the ecological footprint of production of goods, but also creates benefits to our planet across the board.

By allowing (controlled) access to private chargers, the number of vehicles per charging station can be increased.

It is an advantage of embodiments of the present invention that improved charging of electrical vehicles can be obtained, since financial/administrative burdens that come with it are reduced, whereby for example account capacity rates and peak loads can be taken into account. Furthermore, home comfort is not sacrificed. This means that people will effectively charge more at home, which will then also be decentralized and more spread over time.

It is an advantage of embodiments of the present invention that charging can be performed whereby the charging session may be directly charged to the financially responsible party through their own energy bill at their own energy rate, or whereby one has the option to simply compensate with the energy flows one injects via a home electricity grid.

It is an advantage of embodiments of the present invention that range anxiety can be reduced because access is created to all participating charging stations.

In one exemplary embodiment, home energy consumption is monitored and assessed on a real time basis, and charging is continuously adapted according to 'lower' dynamic prices and/or available solar energy of an electricity grid. In the example, when the grid or the household needs extra electricity, the embodiment allows the car-batteries to 'give back' any stored power according to preset parameters without any administrative hassle or limitation to the asset-owner. E.g. when a fleet owner pays for the electricity stored in the batteries and the EV is providing electricity to the grid (or home) for balancing purposes and to mitigate peak use, the actual end-user can be reimbursed for the electricity supplied. By being able to measure these (usually small) exchanges of energy blocks in a certified manner and make these so-called "energy-blocks" undisputed in a distributed ledger administration, these relatively small transactions can be detrimental in the energy transition.

According to embodiments of the present invention, bi-directional charging/discharging the batteries in a connected EV can hugely contribute to a successful transition from fossil fuels to renewable energy. By measuring these relatively small exchanges of electricity back and forth per vehicle, and simply correct meter values accordingly afterwards, the shear number of participants contributing to the necessary balancing of the grid can be substantial. This allows to actively mitigate climate change, as electricity is taken from the grid when wind and solar power are available, and at peak moments the grid is able to use this stored green power in a flexible and intelligent manner without EV drivers and fleet owners having to perform all kinds of complicated actions. By connecting private charge points, a new and until now unused infrastructure is created that adds value to everyone. The reserve capacity of a fleet of vehicles can be made available to the community, thus making society less vulnerable to any increase or decrease in power consumption. It is an advantage of at least some embodiments of the present invention that the only action EV drivers have to do, is to always hook-up their vehicle to any connected charger.

According to embodiments of the present invention, private charge point owners can easily allow any designated third-party EV driver to charge on their premises, thus creating a large pool of additional charging devices in our landscape. This enhances efficient "shared" use of private charging infrastructure. According to embodiments, the charge point owners may fully remain in control of their charge points by managing who uses it, what is the amount of time, what is the quantity and what are the selected energy modes of third-party charging sessions. It is an advantage of embodiments of the present invention that the use of the private infrastructure is improved that the threshold for people who don't have access to charging at whom is lowered. Also, by creating a wider access to this network of semi-private chargers, one gets rid of range anxiety, as more and more devices are at the disposal of the EV drivers, as they mostly travel within their own social circles.

In some embodiments, different rules can be set for different users, or for different conditions wherein users are positioned. Methods and systems may be allowed to identify different users or different conditions and may be configured to implement different charging/discharging rules accordingly.

In a second aspect, the present invention relates to a system for controlling charging and/or discharging of an electrical vehicle (EV) by a user. The system comprises a processor programmed for identifying a selected electrical charging facility selected by the user for charging and/or discharging his electrical vehicle and for identifying the user, the electrical charging facility being owned by a charging facility owner and a first energy counter being associated with the charging facility owner. The processor thereby is programmed for capturing from a data meter associated with the selected electrical charging facility data identifying the amount of transferred energy which was transferred between the electrical charging facility and the electrical vehicle during the charging and/or discharging. The processor also is programmed for transferring the data identifying the transferred energy to a second energy counter associated with the user, and adapting the second energy counter with the data identifying the transferred energy and for correcting the first energy counter with the data identifying the amount of transferred energy.

### Example :

In one example, bidirectional charging by electric vehicles is shown to allow to compensate for energy peak powers needed in a public energy grid. When the community needs power, the energy flows thus can go in the opposite direction as during conventional charging of electric vehicles. Systems according to embodiments of the present invention allow accurate registration of such bi-directional charging. In this way, power peaks can be reduced. This may for example allow for avoiding large investments e.g. avoiding that additional gas power plants need to be build. An average gas power plant typically may supply 300 - 500 Mwe. This corresponds with energy of a fleet of about 15000 electrical cars. Since hundreds of thousands to up to millions of electrical vehicles will be available in the future, this provides an alternative source of energy.

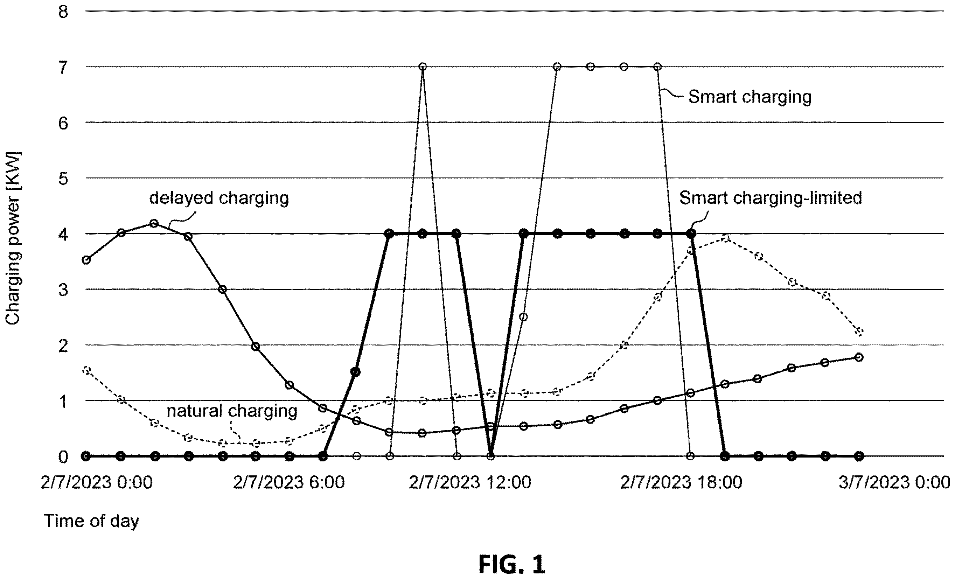

FIG. 1 illustrates differences between normal charging, deferred, also referred to as delayed, charging, smart charging and efficient charging, also referred to as smart-charging-limited, showing that there is flexibility in how electrical vehicles can be charged. This illustrates that charging can be done taking into account other requirements or external conditions.

By charging efficiently, smart charging is utilized by taking into account not only the energy costs, but also the distribution and logistics costs, which are often forgotten and account for an equal share of the total energy costs. The latter may result in improved charging methods for the user and the electricity grid operators.

If electricity grid operators use the stored energy in EV's, in Belgium alone one would save tremendously on CO2 emissions, not to mention investments costs of new gas-fuelled power plants, since terawatts of stored electricity becomes available. This can be done using embodiments of the present invention, allowing accurate registration and follow up of the energy flows.

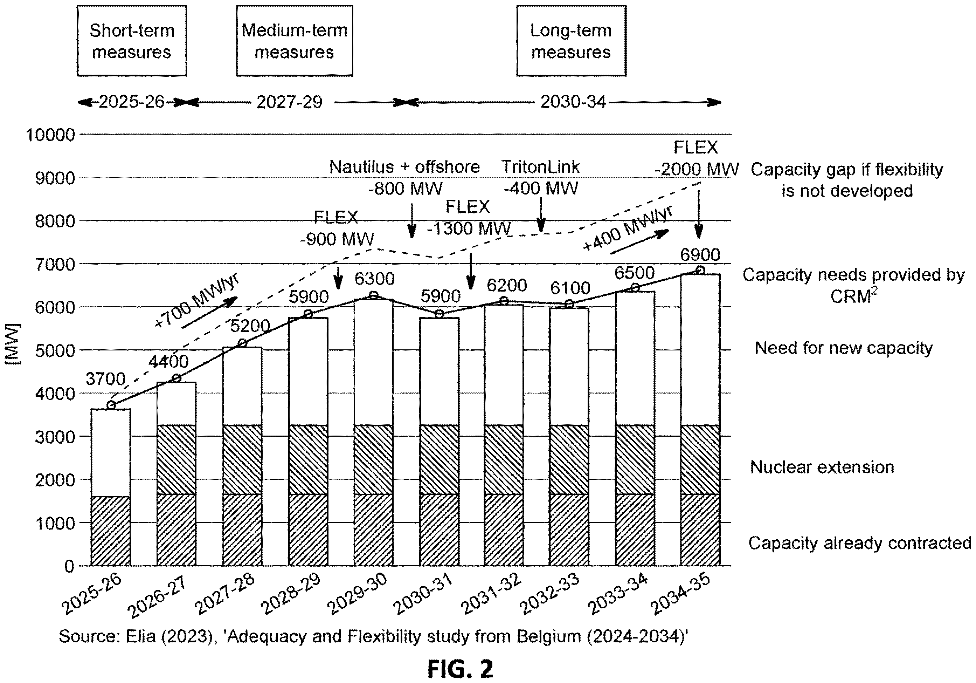

FIG. 2 illustrates the evolution of electric vehicles in Belgium over the following years.

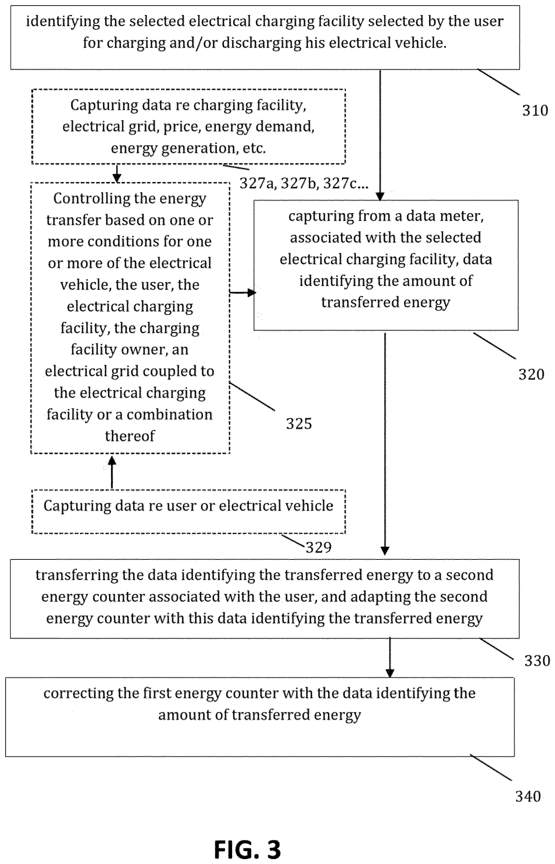

By way of illustration, embodiments of the present invention not being limited thereto, an exemplary embodiment of the present invention is shown in FIG. 3, illustrating standard and optional steps of a method for controlling the charging and/or discharging of an electrical vehicle (EV) by a user.

The method 300 comprises a first step of identifying 310 the selected electrical charging facility selected by the user for charging and/or discharging his electrical vehicle. Such an electrical charging facility typically is owned by a charging facility owner. Typically, there is a first energy counter associated with the charging facility owner.

The method 300 also comprises capturing 320 from a data meter, associated with the selected electrical charging facility, data identifying the amount of transferred energy which is transferred between the electrical charging facility and the electrical vehicle during the charging and/or discharging. In some embodiments, the energy transfer thereby may be controlled 325 depending on one or more conditions. Parameters that may be controlled are the direction of energy transfer, the amount of energy transfer, the speed of energy transfer, the time of energy transfer, etc. According to embodiments of the present invention, the energy transfer thus may be in either direction, i.e. from the electrical charging facility to the electrical vehicle or from the electrical vehicle to the electrical charging facility. The energy transfer thus may be bi-directional. Transferring energy to the electrical vehicle typically occurs when an electrical vehicle is to be charged in order to be able to use it for transportation. Transferring energy to an electrical grid from the electrical vehicle via the electrical charging facility may e.g. be performed for supporting the use of energy by other appliances or loading an external battery, e.g. for averaging the energy available in a local, e.g. domestic, or public electrical grid, etc.

The method 300 also comprises transferring 330 the data identifying the transferred energy to a second energy counter associated with the user, and adapting the second energy counter with this data identifying the transferred energy.

The method 300 furthermore comprises correcting 340 the first energy counter with the data identifying the amount of transferred energy.

In some embodiments, the electrical charging facility is part of an electricity grid and the method may comprise capturing information regarding consumption 327a in the electricity grid. In some embodiments, the method 300 may comprise capturing an energy balance in the electricity grid. Such information may be combined with statistical data from previously captured information or from information available through other sources, historical data from previously captured information or from information available through other sources, predictive data based on previously captured information, based on other sources, or Al generated information or a combination thereof. Such information may for example include information regarding peak moments, moments of little use of energy, moments that other appliances typically require energy, .... Such information typically may be used solely or in combination with other information for controlling 325 the energy transfer.

In some embodiments, the method 300 may comprise capturing information regarding the pricing, e.g. the dynamic price, of energy 327b in the electricity grid. Such information may be combined with statistical data from previously captured information or from information available through other sources, historical data from previously captured information or from information available through other sources, predictive data based on previously captured information, based on other sources, or Al generated information... or a combination thereof. Such information typically may be used solely or in combination with other information for controlling 325 the energy transfer.

In some embodiments, the method 300 may comprise capturing information 327c, 327d, ... regarding one or more of a production of a local, e.g. home, energy system, one or more grid stabilization considerations, mobility requirements of the user, predictions on an energy production and/or consumption of a home energy system and/or predictions on an energy production and/or consumption of a public energy system, etc. Such information may be combined with statistical data from previously captured information or from information available through other sources, historical data from previously captured information or from information available through other sources, predictive data based on previously captured information, based on other sources, or AI generated information... or a combination thereof. Such information typically may be used solely or in combination with other information for controlling 325 the energy transfer.

In some embodiments, the method 300 may comprise information regarding the user 329, e.g. from a user profile. Such information may comprise one or more of a preferred charging speed, an energy price, an expected or predicted mobility requirement of the user, etc. Such information may be combined with statistical data from previously captured information or from information available through other sources, historical data from previously captured information or from information available through other sources, predictive data based on previously captured information, based on other sources, or AI generated information... or a combination thereof. Such information typically may be used solely or in combination with other information for controlling 325 the energy transfer.

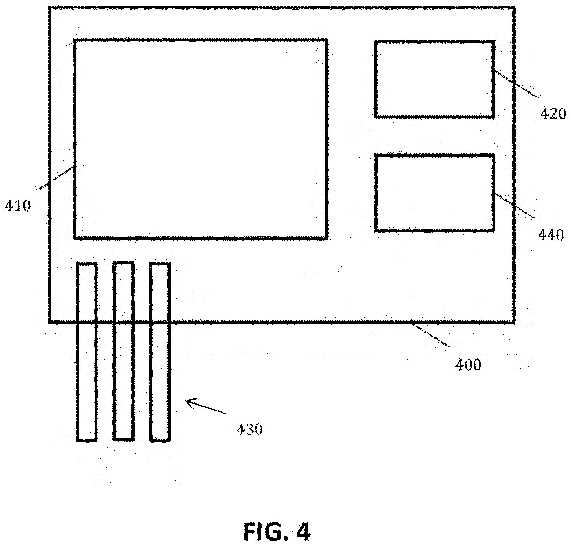

By way of illustration, embodiments of the present invention not being limited thereto, an exemplary embodiment of the present invention is shown in FIG. 4, illustrating standard and optional components of a system for controlling the charging and/or discharging of an electrical vehicle (EV). Such a system 400 typically comprises a processor 410 programmed for performing the steps according to embodiments according to the first aspect, e.g. a processor 410 programmed for performing the standard and optionally the optional steps as set out in the exemplary method of FIG. 3. The system 400 furthermore may comprise a memory 420 for storing information, input and output ports 430 for receiving data and for outputting processed data, a communication module 440 e.g. in communication with the electrical charging facility, energy meters, energy providers, etc. Further optional components also may be present, as known by the person skilled in the art.

## Claims

1. A method (300) for controlling charging and/or discharging of an electrical vehicle (EV) by a user, the method (300) comprising
- identifying (310) the selected electrical charging facility selected by the user for charging and/or discharging his electrical vehicle, the electrical charging facility being owned by a charging facility owner and a first energy counter being associated with the charging facility owner,
- capturing (320) from a data meter associated with the selected electrical charging facility data identifying the amount of transferred energy which is transferred between the electrical charging facility and the electrical vehicle during the charging and/or discharging,
- transferring (330) the data identifying the transferred energy to a second energy counter associated with the user, and adapting the second energy counter with the data identifying the transferred energy,
- correcting (340) the first energy counter with the data identifying the amount of transferred energy.

2. A method (300) according to claim 1, wherein the method comprises controlling (325) the energy transfer based on one or more conditions for one or more of the electrical vehicle, the user, the electrical charging facility, the charging facility owner, an electrical grid coupled to the electrical charging facility or a combination thereof.

3. A method (300) according to any of the previous claims, wherein the transferred energy is energy absorbed by the electrical vehicle during charging.

4. A method (300) according to any of the previous claims wherein the electrical vehicle allows for bi-directional energy transfer.

5. A method (300) according to claim 4, wherein the method (300) comprises transferring energy between the electrical vehicle and the electrical charging facility for generating energy in an electricity grid coupled to the electrical charging facility.

6. A method (300) according to claim 5, wherein the electricity grid comprises a domestic electricity grid and wherein the domestic consumption in the electricity grid is taken into account to decide whether and how energy transfer between the electrical vehicle and the electrical charging facility is performed.

7. A method (300) according to any of claims 5 to 6, wherein the electricity grid comprises a public grid and wherein the energy balance of the public electricity grid is taken into account to decide whether and how energy transfer between the electrical vehicle and the electrical charging facility is performed.

8. A method (300) according to any of the previous claims, wherein for energy transfer between the electrical vehicle and the electrical charging facility the dynamic price of electricity is taken into account.

9. A method (300) according to any of the previous claims, wherein for energy transfer between the electrical vehicle and the electrical charging facility one or more of an energy price, a production of a home energy system, one or more grid stabilization considerations, mobility requirements of the user, predictions on an energy production and/or consumption of a home energy system and/or predictions on an energy production and/or consumption of a public energy system are taken into account (327a, 327b, 327c, ...).

10. A method (300) according to any of the previous claims, wherein for energy transfer between the electrical vehicle and the electrical charging facility a user profile is taken into account (329), the user profile comprising one or more of a preferred charging speed, an energy price, an expected or predicted mobility requirement of the user and/or a historical, expected or predicted energy production and/or consumption of a home energy system of the user.

11. A system (400) for controlling charging and/or discharging of an electrical vehicle (EV) by a user, the system comprising
a processor (410) programmed for identifying a selected electrical charging facility selected by the user for charging and/or discharging his electrical vehicle and for identifying the user, the electrical charging facility being owned by a charging facility owner and a first energy counter being associated with the charging facility owner,
the processor being programmed for capturing from a data meter associated with the selected electrical charging facility data identifying the amount of transferred energy which was transferred between the electrical charging facility and the electrical vehicle during the charging and/or discharging,
for transferring the data identifying the transferred energy to a second energy counter associated with the user, and adapting the second energy counter with the data identifying the transferred energy,
and for correcting the first energy counter with the data identifying the amount of transferred energy.

12. The system according to claim 11, the system furthermore comprising one or more of a memory (420) for storing information, input and output ports (430) for receiving data and for outputting processed data, and a communication module (440).
